# EUROPEAN PATENT APPLICATION

(11) **EP 3 185 066 A1**
(43) Date of publication of application: **28.06.2017**
(21) Application number: 15833900.2
(22) Date of filing: 24.08.2015
(51) Int. Cl.: G02F 1/13, G02F 1/1333, G02F 1/1335

(54) **FRAMELESS DISPLAY DEVICE AND MOBILE TERMINAL**

(30) Priority: 22.08.2014 CN 201410419400
(71) Applicant: Nubia Technology Co., Ltd., Shenzhen, Guangdong 518000 (CN)
(72) Inventor: SHI, Jiecheng, Shenzhen, Guangdong 518000 (CN)
(74) Representative: Regimbeau
(86) International application number: PCT/CN2015/087938
(87) International publication number: WO 2016/026467

(57) **Abstract**

The embodiments of the present invention disclose a frameless display device and a mobile terminal, and relates to a display device manufacturing technology in the field of mobile terminals. The device includes: a middle frame, a display screen set within the middle frame, and a transparent cover plate set on the display screen. The middle frame includes a main plate and a side plate. The main plate and the side plate are connected to form an accommodating space for accommodating the display screen. The side plate includes a beveled edge. A chamfer is formed at the edge of the transparent cover plate.

## Description

### TECHNICAL FIELD

The present invention relates to technologies for manufacturing a display device in the field of mobile terminals, and in particular, to a frameless display device and a mobile terminal.

### BACKGROUND

With the development of a display technology, various new display devices emerge continuously. A Liquid Crystal Display (LCD) has the advantages of a thin body, power saving, no radiation and the like, and is widely applied to mobile terminal. Most of LCDs available in the current market are backlight-type LCDs. This type of LCD includes a rear housing, a front housing, a backlight module, a plastic cement frame, and a liquid crystal display panel. The front housing is adaptive to the rear housing. The backlight module is set within the rear housing. The plastic cement frame is set on the backlight module. The liquid crystal display panel is set on the plastic cement frame. The plastic cement supports the liquid crystal display panel. The front housing is configured to fix the liquid crystal display panel. According to the working principle of the liquid crystal display panel, liquid crystal molecules are placed between two parallel glass substrates, the directions of the liquid crystal molecules are controlled according to whether the glass substrates are supplied with power, and light from the backlight module is refracted to generate a picture.

With the continuous development of technologies for producing an LCD, in order to improve the user experience, frames of the LCDs tend to be narrower and narrower. Most of mobile terminals available in the market adopt liquid crystal display screens. In order to increase the sizes of the display screens of the mobile terminals while making the sizes of the mobile terminals not increased in proportion along with increase of the sizes of the display screens, it is necessary to design the frames of the display screens of the mobile terminals to be small or to even achieve the effect of frameless displaying.

### SUMMARY

Embodiments of the present invention provide a frameless display device and a mobile terminal, intended to solve the technical problem that a frame of a display screen of a mobile terminal is relatively wide.

To solve the above-mentioned technical problem, the technical solution is adopted in the embodiments of the present invention as follows.

According to an aspect of the embodiments of the present invention, a frameless display device is provided. The device may include a middle frame, a display screen set within the middle frame, and a transparent cover plate set on the display screen. The middle frame may include a main plate and a side plate. The main plate and the side plate may be connected to form an accommodating space for accommodating the display screen. The side plate may include a beveled edge. A chamfer may be formed at the edge of the transparent cover plate.

Preferably, the main plate and the side plate may be perpendicular to each other.

Preferably, the thickness of the main plate may be equal to that of the side plate.

Preferably, the main plate and the side plate may be formed integrally.

Preferably, the display screen may include a backlight module, a liquid crystal panel set on the backlight module, and a touch panel set on the liquid crystal panel.

Preferably, a display area may be set between the touch panel and the transparent cover plate, and the width of the backlight module is greater than that of the display area.

Preferably, a gap may be set between the display area and the side plate, a ratio of the thickness of the transparent cover plate to the width of the gap being greater than or equal to 1.25.

Preferably, the width of the display area may be equal to that of an upper surface of the transparent cover plate, and the edge of the display area may be aligned with a joint between the upper surface of the transparent cover plate and the chamfer.

Preferably, the middle frame may be made of metal or plastic cement.

According to a further aspect of the embodiments of the present invention, a mobile terminal is provided. The mobile terminal may include the above-mentioned frameless display device.

Compared with the conventional art, the frameless display device of the embodiments of the present invention has the advantages that a chamfer is formed at the edge of the transparent cover plate, and light emitted from the backlight module is refracted by the chamfer of the transparent cover plate and emitted out from the position of the chamfer, thereby enlarging the display area. Moreover, the middle frame is provided with a beveled edge in the direction of the chamfer. Hence, from the perspective of a front of the transparent cover plate in direction perpendicular to the transparent cover plate, the area in the extension direction of the entire transparent cover plate is a visible area, i.e., the display range of the display screen extends to the edge of the display screen of the mobile terminal, thereby achieving the effect of frameless displaying and improving the user experience.

### BRIEF DESCRIPTION OF THE DRAWINGS

FIG. 1 is a schematic diagram showing a structure of a frameless display device according to an embodiment of the present invention.
FIG. 2 is a schematic diagram showing a structure in a section taking along a line AA' in FIG. 1.
FIG. 3 is a diagram showing refraction of display light of a frameless display device according to an embodiment of the present invention.
FIG. 4 is a schematic diagram showing a structure of hardware of a mobile terminal in relation to an embodiment of the present invention.
FIG. 5 is a schematic diagram showing a wireless communication system of a mobile terminal as shown in FIG. 4.

Descriptions of reference numbers in the accompanying drawings:
1, frameless display device; 110, transparent cover plate; 111, circular arc edge;
120, display area; 130, display screen; 131, touch panel;
132, liquid crystal panel; 133, backlight module; 140, middle frame;
141, main plate; 142, side plate; 1421, beveled edge.

### DETAILED DESCRIPTION

In order to make the technical problems to be solved by the present invention, the technical solution and the beneficial effects clearer, the present invention will be further elaborated hereinbelow in conjunction with the accompanying drawings and the embodiments. It should be understood that specific embodiments described herein are only intended to explain the present invention, and thus are not limitative of the present invention.

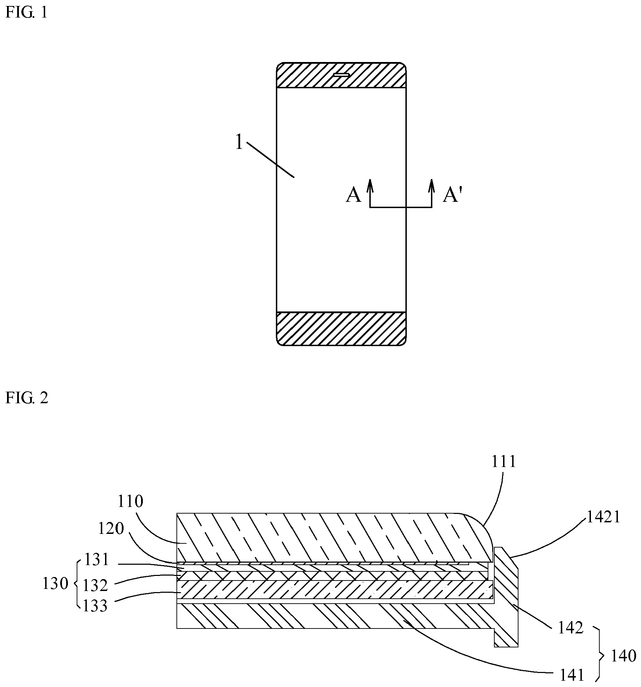

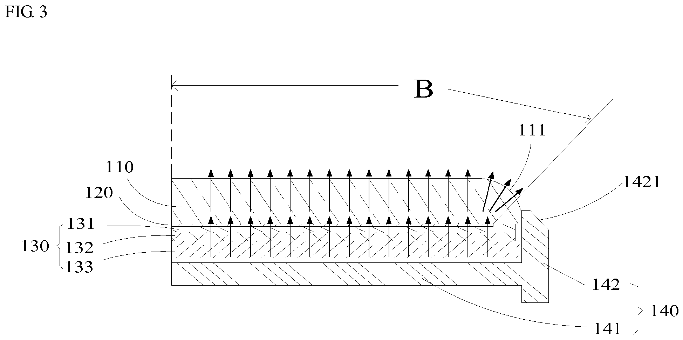

Referring to FIGs. 1-3, a frameless display device 1 provided by the embodiment of the present invention includes a middle frame 140, a display screen 130, and a transparent cover plate 110. The display screen 130 is set within the middle frame 140. The transparent cover plate 110 is set on the display screen 130. Because FIGs. 2 and 3 are schematic diagrams of a structure in a section, descriptions hereafter for a line, e.g., descriptions for a side, are the descriptions for a surface actually, as will be understood by those skilled in the art beyond all doubt.

The middle frame 140 includes a main plate 141 and a side plate 142. The main plate 141 is, preferably, a plate having a plane structure. Certainly, the structure is not limited to a strict plane structure, and may be an uneven structure. The main plate 141 and the side plate 142 are connected to form an accommodating space. The edge of the main plate 141 extends out at a certain angle (e.g., an obtuse angle, a right angle or an acute angle) to obtain the side plate 142. The above description 'the edge of the main plate 141 extends out at a certain angle to obtain the side plate 142' is a visual description, which should not be understood as an actual forming method for the side plate 142. Certainly, the actual forming method for the side plate 142 is also not limited thereto. The accommodating space is configured to hold or accommodate the display screen 130. The main plate 141 and the side plate 142 may be formed integrally, or they are connected together by means of buckles, screws, adhesives or the like.

The side plate 142 includes a beveled edge 1421 such as a fold line edge or an arc edge, or the beveled edge 1421 preferably is an oblique edge as shown in FIG. 2. The side plate 142 includes a side close to the display screen 130 and a side away from the display screen 130. The side close to the display screen 130 and the side away from the display screen 130 are parallel to each other, or parallelism is not limited to strict parallelism. Two ends of the beveled edge 1421 are intersected with the side close to the display screen 130 and the side away from the display screen 130 respectively. Alternatively, as shown in FIG. 2, one end of the beveled edge 1421 is intersected with the side away from the display screen 130, and an extension line of the other end is intersected with the side close to the display screen 130.

The display screen 130 is set within the middle frame 140. That is, the display screen 130 is placed in the accommodating space formed between the main plate 141 and the side plate 142. Preferably, the display screen 130 includes a touch panel 131, a liquid crystal panel 132 and a backlight module 133, which are set adjacently in sequence. The liquid crystal panel 132 may also be replaced with an Organic Light Emitting Diode (OLED) panel, an electrowetting panel or other display panels. In addition, the display screen 130 may also only have a display function, and a touch function is omitted.

The transparent cover plate 110 is set on the display screen 130, that is, the transparent cover plate 110 and the display screen 130, and the main plate 141 of the middle frame 140 are adjacent in sequence. Preferably, the transparent cover plate 110 is entirely or partially placed in the accommodating space formed between the main plate 141 and the side plate 142. Certainly, the transparent cover plate 110 may also be set outside the accommodating space formed between the main plate 141 and the side plate 142. In the schematic diagrams shown in FIGs. 2-3, the transparent cover plate 110 is partially placed in the accommodating space formed between the main plate 141 and the side plate 142. In addition, the transparent cover plate 110 may be made of glass, plastic cement or other materials.

At the edge of the transparent cover plate 110, a chamfer such as a fold line edge or an oblique edge is formed, or the chamfer preferably is a circular arc edge 111 as shown in FIG. 2, or is a combination of various types. As shown in FIG. 2, the transparent cover plate 110 includes two parallel sides (certainly, these two sides are not limitative of being strictly parallel), and one of the sides is closer to the display screen 130 relative to the other side. The side, away from the display screen 130, of the transparent cover plate 110 starts to bend to form a circular arc extending to the side close to the display screen 130, so as to form the circular arc edge 111. The above description 'starts to bend to form a circular arc' is a visual description, which should not be understood as an actual forming method for the circular arc edge 111. Certainly, the actual forming method for the circular arc edge 111 is also not limited thereto. For another example, when the side, away from the display screen 130, of the transparent cover plate 110 starts to bend to form a circular arc extending to the side close to the display screen 130, the circular arc turns into a straight line or a fold line The fold line is intersected with the side close to the display screen 130. As such, a chamfer is formed by combining the circular arc edge 111 and the straight line (or fold line). The straight line or fold line turned from the circular arc abuts against the side plate 142. With contact like this (referring to surface contact as compared to point contact or line contact), the transparent cover plate 110 and the middle frame 140 can be well fixed.

By taking the main plate 141 of the middle frame 140 as a reference, the height of the transparent cover plate 110 is greater than that of the side plate 142.

A continuous structure design of gradual expansion between the circular arc edge 111 of the transparent cover plate 110 and the beveled edge 1421 of the side plate 142 or a slope design makes a product design satisfy the aesthetic feeling of an industrial design, and also makes a user have a mellow or smooth contact experience instead of a bad sharp touching experience during touch or grip.

Preferably, a tangent line of a certain point of the circular arc edge 111 passes through the beveled edge 1421 of the side plate 142.

As shown in FIG. 3, in case of allowing light to pass through the liquid crystal panel 132, light generated by the backlight module 133 passes through the liquid crystal panel 132 and the touch panel 131. Then, the light passes through the transparent cover plate 110. A part of the light partially is emitted out along the perpendicular line direction of the transparent cover plate 110. The other part of the light is refracted along the circular edge 111 of the transparent cover plate 110 and emitted out from the circular arc edge 111. Due to design of the circular arc edge 111, the display area is enlarged, as shown in a B area in FIG. 3. Moreover, the middle frame 140 is provided with the beveled edge 1421 along the direction of the circular arc edge 111. Therefore, from the perspective of a front of the transparent cover plate in direction perpendicular to the transparent cover plate 110, the area in extension direction of the entire transparent cover plate 110 is a visible area. That is, the display range of the display screen 130 extends to the edge of the display screen 130 of the mobile terminal. As such, the effect of frameless displaying is achieved and the user experience is improved.

According to the frameless display device 1 provided by the embodiments of the present invention, referring to FIG. 2, on the basis of the above-mentioned technical solution, preferably, the main plate 141 and the side plate 142 are perpendicular to each other. The main plate 141 supports the display screen 130 assembled in the middle frame 140 and the transparent cover plate 110 on the display screen 130. The side plate 142 is configured to fix the display screen 130 or configured to fix the display screen 130 and the transparent cover plate 110.

According to the frameless display device 1 provided by the embodiments of the present invention, referring to FIG. 2, on the basis of the above-mentioned technical solution, preferably, the thickness of the main plate 141 is equal to that of the side plate 142.

Referring to FIG. 3, the display screen 130 provides a display area 120 and a non-display area outside the display area 120. In order to explain the present invention, the display area 120 in FIG. 3 is only a schematic diagram, and is not for showing structural modules. According to the frameless display device 1 provided by the embodiments of the present invention, on the basis of the above-mentioned technical solution, preferably, the width of the backlight module 133 is greater than that of the liquid crystal panel 132, the width of the liquid crystal panel 132 is equal to that of the touch panel 131, and the width of the liquid crystal panel 132 is greater than that of the display area 120. The backlight module 133 provides a light source which is displayed by means of the display area 120. Accordingly, the display area 120 should be an actual graph display area. However, because light provided by the backlight module 133 is partially refracted by the circular arc edge 111 of the transparent cover plate 110, a graph displayed at the edge of the display area 120 will be stretched to a certain extent. As such, the graph display area is enlarged. Therefore, from the perspective of a front in perpendicular direction, the extension direction of the entire transparent cover plate 110 is a visible area.

According to the frameless display device 1 provided by the embodiments of the present invention, referring to FIG. 2, on the basis of the above-mentioned technical solution, preferably, a gap is set between the display area 120 and the side plate 142, and a ratio of the thickness of the transparent cover plate 110 to the width of the gap is greater than or equal to 1.25. The ratio of the thickness of the transparent cover plate 110 to the width of the gap decides a radian of the circular arc edge 111. 1.25 is a preferred value, such that from the perspective of the front of the display screen, the extension direction of the transparent cover plate 110 is a visible area. A preferred solution is that the thickness of the transparent cover plate 110 is 1mm, spacing between the edge of the display area 120 and the side plate 142 is 0.8mm, and the ratio of the thickness to the spacing is 1.25.

According to the frameless display device 1 provided by the embodiments of the present invention, referring to FIG. 2, on the basis of the above-mentioned technical solution, specifically, the width of the display area 120 is equal to that of an upper surface of the transparent cover plate 110, and the edge of the display area 120 is aligned with a joint between the upper surface of the transparent cover plate 110 and the circular arc edge 111.

According to the frameless display device 1 provided by the embodiments of the present invention, referring to FIGs. 1-3, preferably, the middle frame 140 is made of metal such as copper (Cu), aluminum (Al), steel, stainless steel or magnesium, or plastic cement.

Correspondingly, the embodiments of the present invention also provide a mobile terminal 200. The mobile terminal 200 includes the frameless display device 1 of the above-mentioned embodiment.

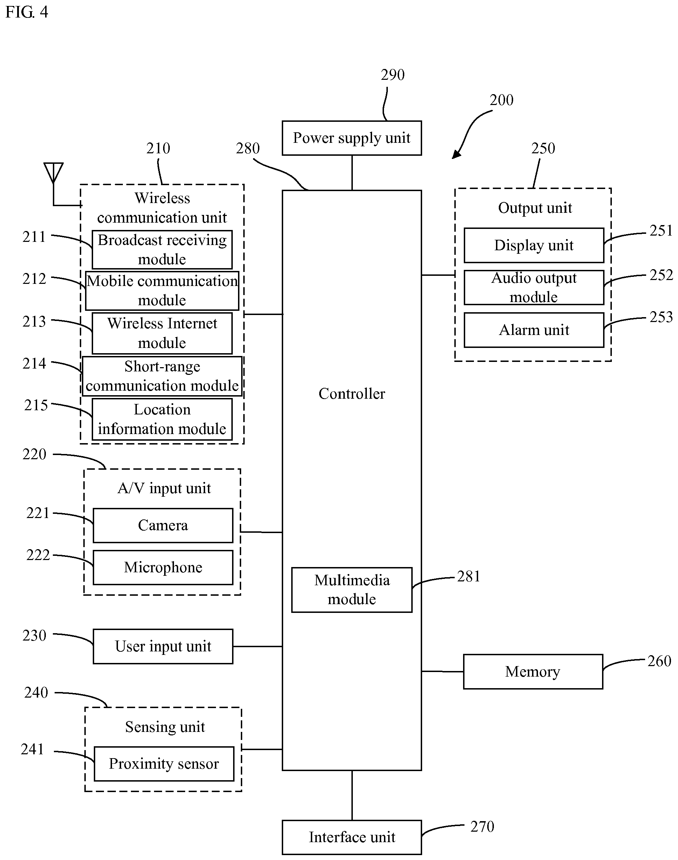

A hardware structure of the mobile terminal 200 in relation to the embodiments of the present invention will be described hereinbelow. FIG. 4 is a schematic diagram showing a structure of hardware of a mobile terminal in relation to an embodiment of the present invention. As shown in FIG. 4, the mobile terminal 200 may include a wireless communication unit 210, an A/V (Audio/Video) input unit 220, a user input unit 230, a sensing unit 240, an output unit 250, a memory 260, an interface unit 270, a controller 280, a power supply unit 290 and the like. FIG. 4 shows the mobile terminal as having various components, but it should be understood that implementing all of the illustrated components is not a requirement. Greater or fewer components may alternatively be implemented. Elements of the mobile terminal will be described below in detail.

The wireless communication unit 210 typically includes one or more components allowing radio communication between the mobile terminal 200 and a wireless communication system or a network. For example, the wireless communication unit may include at least one of a broadcast receiving module 211, a mobile communication module 212, a wireless Internet module 213, a short-range communication module 214, and a location information module 215.

The broadcast receiving module 211 receives broadcast signals and/or broadcast associated information from an external broadcast management server via a broadcast channel. The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal. The broadcast associated information may also be provided via a mobile communication network and, in this instance, the broadcast associated information may be received by the mobile communication module 212. The broadcast signal may exist in various forms. For example, it may exist in the form of an electronic program guide (EPG) of digital multimedia broadcasting (DMB), electronic service guide (ESG) of digital video broadcast-handheld (DVB-H), and the like. The broadcast receiving module 211 may be configured to receive signals broadcast by using various types of broadcast systems. In particular, the broadcast receiving module 211 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{@}), integrated services digital broadcast-terrestrial (ISDB-T), etc. The broadcast receiving module 211 may be configured to be suitable for every broadcast system that provides a broadcast signal as well as the above-mentioned digital broadcast systems. Broadcast signals and/or broadcast-associated information received via the broadcast receiving module 211 may be stored in the memory 260 (or another type of storage medium).

The mobile communication module 212 transmits and/or receives radio signals to and/or from at least one of a base station (e.g., access point, Node B, etc.), an external terminal and a server. Such radio signals may include a voice call signal, a video call signal or various types of data according to text and/or multimedia message transmission and/or reception.

The wireless Internet module 213 supports wireless Internet access for the mobile terminal. This module may be internally or externally coupled to the terminal. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), or the like.

The short-range communication module 214 is a module for supporting short range communications. Some examples of short-range communication technology include Bluetooth.TM., Radio Frequency IDentification (RFID), Infrared Data Association (IrDA), Ultra-WideBand (UWB), ZigBee.TM., and the like.

The location information module 215 is a module for checking or acquiring a location (or position) of the mobile terminal. A typical example of the location information module is a GPS (Global Positioning System). According to the current technology, the GPS module 115 calculates distance information from three or more satellites and accurate time information and applies trigonometry to the calculated information to thereby accurately calculate three-dimensional current location information according to latitude, longitude, and altitude. Currently, a method for calculating location and time information by using three satellites and correcting an error of the calculated location and time information by using another one satellite. In addition, the GPS module 215 can calculate speed information by continuously calculating the current location in real time.

The A/V input unit 220 is configured to receive an audio or video signal. The A/V input unit 220 may include a camera 221 and a microphone 2220. The camera 221 processes image data of still pictures or video obtained by an image capture device in a video capturing mode or an image capturing mode. The processed image frames may be displayed on a display unit 251. The image frames processed by the camera 221 may be stored in the memory 260 (or other storage medium) or transmitted via the wireless communication unit 210. Two or more cameras 2210 may be provided according to the configuration of the mobile terminal. The microphone 222 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 212 during the phone call mode. The microphone 222 may implement various types of noise canceling (or suppression) algorithms to cancel (or suppress) noise or interference generated in the course of receiving and transmitting audio signals.

The user input unit 230 may generate key input data from commands entered by a user to control various operations of the mobile terminal. The user input unit 230 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like. In particular, when the touch pad is overlaid on the display unit 251 in a layered manner, it may form a touch screen.

The sensing unit 240 detects a current status of the mobile terminal 200 such as an opened or closed state of the mobile terminal 200, a location of the mobile terminal 200, the presence or absence of user contact with the mobile terminal 200 (i.e., touch inputs), the orientation of the mobile terminal 200, an acceleration or deceleration movement and direction of the mobile terminal 200, etc., and generates commands or signals for controlling the operation of the mobile terminal 200. For example, when the mobile terminal 200 is implemented as a slide type mobile phone, the sensing unit 240 may sense whether the slide phone is opened or closed. In addition, the sensing unit 240 can detect whether or not the power supply unit 290 supplies power or whether or not the interface unit 270 is coupled with an external device. The sensing unit 240 may include a proximity sensor 2410. This will be described in relation to a touch screen later.

The interface unit 270 serves as an interface by which at least one external device may be connected with the mobile terminal 200. For example, the external devices may include wired or wireless headset ports, an external power supply (or battery charger) ports, wired or wireless data ports, memory card ports, ports for connecting a device having an identification module, audio input/output (I/O) ports, video I/O ports, earphone ports, or the like. The identification module may be a memory chip that stores various information for authenticating a user's authority for using the mobile terminal 200 and may include a user identity module (UIM), a subscriber identity module (SIM) a universal subscriber identity module (USIM), and the like. In addition, the device having the identification module (referred to as the 'identifying device', hereinafter) may take the form of a smart card. Accordingly, the identifying device may be connected with the terminal 200 via a port or other connection means. The interface unit 270 may be used to receive inputs (e.g., data, information, power, etc.) from an external device and transfer the received inputs to one or more elements within the mobile terminal 200 or may be used to transfer data between the mobile terminal and an external device.

In addition, when the mobile terminal 200 is connected with an external cradle, the interface unit 270 may serve as a conduit to allow power from the cradle to be supplied therethrough to the mobile terminal 200 or may serve as a conduit to allow various command signals input from the cradle to be transferred to the mobile terminal therethrough. Various command signals or power input from the cradle may be operated as a signal for recognizing that the mobile terminal is accurately mounted on the cradle. The output unit 250 is configured to provide outputs in a visual, audible, and/or tactile manner (e.g., audio signal, video signal, alarm signal, vibration signal, etc.). The output unit 250 may include the display unit 251, an audio output module 252, an alarm unit 253, and the like.

The display unit 251 may display information processed in the mobile terminal 200. For example, when the mobile terminal 200 is in a phone call mode, the display unit 251 may display a User Interface (UI) or a Graphic User Interface (GUI) associated with a call or other communication (such as text messaging, multimedia file downloading, etc.). When the mobile terminal 200 is in a video call mode or image capturing mode, the display unit 251 may display a captured image and/or received image, a UI or GUI that shows videos or images and functions related thereto, and the like.

Meanwhile, when the display unit 251 and the touch pad are overlaid in a layered manner to form a touch screen, the display unit 251 may function as both an input device and an output device. The display unit 251 may include at least one of a Liquid Crystal Display (LCD), a Thin Film Transistor-LCD (TFT-LCD), an Organic Light Emitting Diode (OLED) display, a flexible display, a three-dimensional (3D) display, or the like. Some of them may be configured to be transparent to allow viewing of the exterior, which may be called transparent displays. A typical transparent display may be, for example, a TOLED (Transparent Organic Light Emitting Diode) display, or the like. The mobile terminal 200 may include two or more display units (or other display means) according to its particular desired embodiment. For example, the mobile terminal may include both an external display unit and an internal display unit. The touch screen may be configured to detect even a touch input pressure as well as a touch input position and a touch input area.

The audio output module 252 may convert and output as sound audio data received from the wireless communication unit 210 or stored in the memory 260 in a call signal reception mode, a call mode, a record mode, a voice recognition mode, a broadcast reception mode, and the like. Also, the audio output module 252 may provide audible outputs related to a particular function performed by the mobile terminal 200 (e.g., a call signal reception sound, a message reception sound, etc.). The audio output module 252 may include a speaker, a buzzer, or the like.

The alarm unit 253 may provide outputs to inform about the occurrence of an event of the mobile terminal 200. Typical events may include call reception, message reception, key signal inputs, a touch input etc. In addition to audio or video outputs, the alarm unit 253 may provide outputs in a different manner to inform about the occurrence of an event. For example, the alarm unit 253 may provide an output in the form of vibrations. When a call, a message, or some other incoming communication is received, the alarm unit 253 may provide tactile outputs (i.e., vibrations) to inform the user thereof. By providing such tactile outputs, the user can recognize the occurrence of various events even if his mobile phone is in the user's pocket. Outputs informing about the occurrence of an event may be also provided via the display unit 251 or the audio output module 252.

The memory 260 may store software programs or the like used for the processing and controlling operations performed by the controller 280, or may temporarily store data (e.g., a phonebook, messages, still images, video, etc.) that have been output or which are to be output. Also, the memory 260 may store data regarding various patterns of vibrations and audio signals output when a touch is applied to the touch screen.

The memory 260 may include at least one type of storage medium including a Flash memory, a hard disk, a multimedia card, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, an optical disk, and the like. Also, the mobile terminal 200 may cooperate with a network storage device that performs the storage function of the memory 260 over a network connection.

The controller 280 typically controls the general operations of the mobile terminal. For example, the controller 280 performs controlling and processing associated with voice calls, data communications, video calls, and the like. In addition, the controller 280 may include a multimedia module 1810 for reproducing (or playing back) multimedia data. The multimedia module 1810 may be configured within the controller 180 or may be configured to be separate from the controller 280. The controller 280 may perform a pattern recognition processing to recognize a handwriting input or a picture drawing input performed on the touch screen as characters or images.

The power supply unit 290 receives external power or internal power and supplies appropriate power required for operating respective elements and components under the control of the controller 280.

Various embodiments as described herein may be implemented in a computer-readable medium using, for example, computer software, hardware, or any combination thereof. For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some instances, such embodiments may be implemented in the controller 280. For software implementation, the embodiments such as procedures or functions may be implemented together with separate software modules that allow performing of at least one function or operation. Software codes can be implemented by a software application (or program) written in any suitable programming language. The software codes may be stored in the memory 260 and executed by the controller 280.

So far, the mobile terminal has been described from the perspective of its functions. Hereinafter, a slide-type mobile terminal, among various types of mobile terminal such as folder-type, bar-type, swing-type, slide type mobile terminals, or the like, will be described as an example for the sake of brevity. Thus, the present invention can be applicable to any type of mobile terminal, without being limited to the slide-type mobile terminal.

The mobile terminal 200 as shown in FIG. 4 may be configured to operate with a communication system, which transmits data via frames or packets, such as wired and wireless communication systems, as well as satellite-based communication systems.

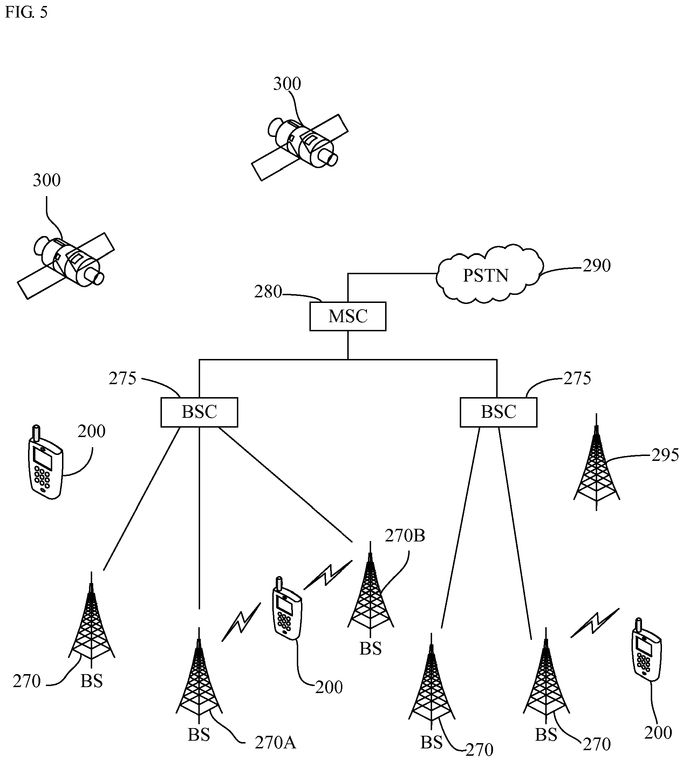

Such communication systems in which the mobile terminal according to an embodiment of the present invention can operate will now be described with reference to FIG. 5.

These communication systems may use different air interfaces and/or physical layers. For example, air interfaces utilized by the communication systems include example, frequency division multiple access (FDMA), time division multiple access (TDMA), code division multiple access (CDMA), and universal mobile telecommunications system (UMTS) (in particular, long term evolution (LTE)), global system for mobile communications (GSM), and the like. As a non-limiting example, the description hereafter relates to a CDMA communication system, but such teachings apply equally to other types of systems.

Referring to FIG. 5, a CDMA wireless communication system may include a plurality of mobile terminals 200, a plurality of base stations (BSs) 270, base station controllers (BSCs) 275, and a mobile switching center (MSC) 280. The MSC 280 is configured to interface with a public switch telephone network (PSTN) 290. The MSC 280 is also configured to interface with the BSCs 275, which may be coupled to the base stations 270 via backhaul lines. The backhaul lines may be configured in accordance with any of several known interfaces including, for example, E1/T1, ATM, IP, PPP, Frame Relay, HDSL, ADSL, or xDSL. It is to be understood that the system as shown in FIG. 2 may include a plurality of BSCs 275.

Each BS 270 may serve one or more sectors (or regions), each sector covered by an omni-directional antenna or an antenna pointed in a particular direction radially away from the BS 270. Alternatively, each sector may be covered by two or more antennas for diversity reception. Each BS 270 may be configured to support a plurality of frequency assignments, and each frequency assignment has a particular spectrum (e.g., 1.25 MHz, 5 MHz, etc).

The intersection of a sector and frequency assignment may be referred to as a CDMA channel. The BS 270 may also be referred to as base station transceiver subsystems (BTSs) or other equivalent terms. In this situation, the term "base station" may be used to collectively refer to a single BSC 275 and at least one BS 270. The base station may also be referred to as a "cell site". Alternatively, individual sectors of a particular BS 270 may be referred to as a plurality of cell sites.

As shown in FIG. 5, a broadcasting transmitter (BT) 295 transmits a broadcast signal to the mobile terminals 200 operating within the system. The broadcast receiving module 211 as shown in FIG. 4 is set at the terminal 200 to receive broadcast signals transmitted by the BT 295. In FIG. 5, several global positioning systems (GPS) satellites 300 are shown. The satellites 300 help locate at least one of a plurality of terminals 200.

In FIG. 5, several satellites 300 are depicted, but it is understood that useful positioning information may be obtained with any number of satellites. The GPS module 215 as shown in FIG. 4 is typically configured to cooperate with the satellites 300 to obtain desired positioning information. Instead of or in addition to GPS tracking techniques, other technologies that may track the location of the mobile terminals may be used. In addition, at least one of the GPS satellites 300 may selectively or additionally handle satellite DMB transmissions.

As one typical operation of the wireless communication system, the BSs 270 receive reverse-link signals from various mobile terminals 200. The mobile terminals 200 typically engaging in calls, messaging, and other types of communications. Each reverse-link signal received by a particular base station 270 is processed within the particular BS 270. The resulting data is forwarded to an associated BSC 275. The BSC provides call resource allocation and mobility management functionality including the coordination of soft handoff procedures between BSs 270. The BSCs 275 also route the received data to the MSC 280, which provides additional routing services for interfacing with the PSTN 290. Similarly, the PSTN 290 interfaces with the MSC 280, the MSC interfaces with the BSCs 275, and the BSCs 275 in turn control the BSs 270 to transmit forward-link signals to the mobile terminals 200.

According to the frameless display device 1 and the mobile terminal in the above-mentioned embodiment, the edge of the transparent cover plate 110 is the circular arc edge 111, and light emitted from the backlight module is refracted by the circular arc edge 111 of the transparent cover plate 110 and emitted out from the position of the circular arc edge 111, thereby enlarging the display area. Moreover, the upper corner of the middle frame 140 is provided with the beveled edge 1421 in the direction of the circular arc edge 111. Hence, when a user views from a front in direction perpendicular to the display screen, the area in the extension direction of the transparent cover plate 110 is a visible area, i.e., the display range of the display screen extends to the edge, thereby achieving the effect of frameless displaying and improving the user experience.

A preferred embodiment of the present invention is described above with reference to the accompanying drawings, and the scope of protection of the present invention is not limited accordingly. Those skilled in the art may implement the present invention by various transformed solutions without departing from the scope and essence of the present invention. For example, features of an embodiment may be applied to a further embodiment to obtain yet a further embodiment. Any modifications, equivalent replacements and improvements made within the application of the technical concept of the present invention should fall within the scope of protection of the present invention.

## Claims

1. A frameless display device, comprising a middle frame, a display screen and a transparent cover plate, the display screen being set within the middle frame, and the transparent cover plate being set on the display screen, the middle frame comprising a main plate and a side plate, the main plate and the side plate being connected to form an accommodating space for accommodating the display screen; the side plate comprising a beveled edge, and a chamfer being formed at the edge of the transparent cover plate.

2. The frameless display device according to claim 1, wherein the main plate and the side plate are perpendicular to each other.

3. The frameless display device according to claim 2, wherein the thickness of the main plate is equal to that of the side plate.

4. The frameless display device according to claim 3, wherein the main plate and the side plate are formed integrally.

5. The frameless display device according to claim 1, wherein the display screen comprises a backlight module, a liquid crystal panel set on the backlight module, and a touch panel set on the liquid crystal panel.

6. The frameless display device according to claim 5, wherein a display area is set between the touch panel and the transparent cover plate, and the width of the backlight module is greater than that of the display area.

7. The frameless display device according to claim 6, wherein a gap is set between the display area and the side plate, and a ratio of the thickness of the transparent cover plate to the width of the gap is greater than or equal to 1.25.

8. The frameless display device according to claim 7, wherein the width of the display area is equal to that of an upper surface of the transparent cover plate, and the edge of the display area is aligned with a joint between the upper surface of the transparent cover plate and the chamfer.

9. The frameless display device according to any one of claims 1-8, wherein the middle frame is made of metal.

10. The frameless display device according to any one of claims 1-8, wherein the middle frame is made of plastic cement.

11. A mobile terminal, comprising:
a frameless display device, comprising a middle frame, a display screen and a transparent cover plate, the middle frame being set within the middle frame, and a transparent cover plate being set on the display screen, wherein the middle frame comprises a main plate and a side plate, the main plate and the side plate are connected to form an accommodating space for accommodating the display screen; the side plate comprises a beveled edge, and a chamfer is formed at the edge of the transparent cover plate.

12. The frameless display device according to claim 11, wherein the main plate and the side plate are perpendicular to each other.

13. The frameless display device according to claim 12, wherein the thickness of the main plate is equal to that of the side plate.

14. The frameless display device according to claim 13, wherein the main plate and the side plate are formed integrally.

15. The frameless display device according to claim 11, wherein the display screen comprises a backlight module, a liquid crystal panel set on the backlight module, and a touch panel set on the liquid crystal panel.

16. The frameless display device according to claim 15, wherein a display area is set between the touch panel and the transparent cover plate, the width of the backlight module being greater than that of the display area.

17. The frameless display device according to claim 16, wherein a gap is set between the display area and the side plate, a ratio of the thickness of the transparent cover plate to the width of the gap being greater than or equal to 1.25.

18. The frameless display device according to claim 17, wherein the width of the display area is equal to that of an upper surface of the transparent cover plate, and the edge of the display area is aligned with a joint between the upper surface of the transparent cover plate and the chamfer.

19. The frameless display device according to any one of claims 11-18, wherein the middle frame is made of metal.

20. The frameless display device according to any one of claims 11-18, wherein the middle frame is made of plastic cement.
